# EUROPÄISCHE PATENTANMELDUNG

(11) **EP 3 973 839 A1**
(43) Veröffentlichungstag der Anmeldung: **30.03.2022**
(21) Anmeldenummer: 20197764.2
(22) Anmeldetag: 23.09.2020
(51) Int. Cl.: A47L 9/20

(54) **FILTEREINRICHTUNG FÜR EINEN STAUBSAUGER UND FILTERABREINIGUNGSVERFAHREN**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Filtereinrichtung für einen Staubsauger. Die Filtereinrichtung weist zwei Kammern auf, von denen zumindest jeweils eine am Saugbetrieb des Staubsaugers teilnimmt, während ein Filterelement der anderen Kammer abgereinigt werden kann. Dadurch kann während der Abreinigung des einen Filterelements der Saugbetrieb durch die andere Kammer des Staubsaugers aufrechterhalten werden. Ermöglicht wird dies durch eine elastische Membran, die ihre Form ändern bzw. sich bewegen kann, wenn die abzureinigende Kammer belüftet wird. Die Belüftung erfolgt durch einen Druckausgleichsstrom, der durch einen Belüftungskanal und eine Belüftungsöffnung in die abzureinigende Kammer gelangt. Durch die Bewegung bzw. Formänderung der elastischen Membran wird ein Abreinigungsimpuls auf das Filterelement ausgeübt, der beispielsweise einen festgebackenen Filterkuchen löst, der dann in den Staubsammelbehälter des Staubsaugers fällt.

Verfahren zum Abreinigen einer Filtereinrichtung in einem Staubsauger

## Beschreibung

Die Erfindung betrifft in einem ersten Aspekt eine Filtereinrichtung für einen Staubsauger. Die Filtereinrichtung weist zwei Kammern auf, von denen zumindest jeweils eine am Saugbetrieb des Staubsaugers teilnimmt, während ein Filterelement der anderen Kammer abgereinigt werden kann. Dadurch kann während der Abreinigung des einen Filterelements der Saugbetrieb durch die andere Kammer des Staubsaugers aufrechterhalten werden. Ermöglicht wird dieser Vorteil durch eine elastische Membran, die ihre Form ändern bzw. sich bewegen kann, wenn die abzureinigende Kammer belüftet wird. Die Belüftung erfolgt durch einen Druckausgleichsstrom, der durch einen Belüftungskanal und eine Belüftungsöffnung in die abzureinigende Kammer gelangen kann. Durch die Bewegung bzw. Formänderung der elastischen Membran wird ein Abreinigungsimpuls auf das Filterelement ausgeübt, der beispielsweise dafür sorgen kann, dass ein festgebackener Filterkuchen gelöst wird und in den Staubsammelbehälter des Staubsaugers fällt. In einem zweiten Aspekt betrifft die Erfindung ein Verfahren zum Abreinigen einer Filtereinrichtung in einem Staubsauger.

### Hintergrund der Erfindung:

Auf Baustellen werden oftmals Staubsauger verwendet, um Schmutzpartikel in Form von Staub, Bohrmehl oder dergleichen auf- oder einzusaugen. Zum Aufsammeln des Schmutzes wird mittels einer Turbine ein Unterdruck im Inneren des Staubsaugers erzeugt. Über einen Schlauch, der mit dem Staubsauger verbunden ist, wird der Unterdruck genutzt, um Schmutzpartikel aufzusaugen und in einen Auffangbehälter des Staubsaugers zu transportieren. Handelsübliche Staubsauger sind gewöhnlich so aufgebaut, dass die Turbine, ein Filter, der Auffangbehälter sowie die Eintrittsöffnung für die angesaugten Schmutzpartikel hintereinander bzw. auf einem Strömungspfad liegen. Üblicherweise ist zwischen dem Auffangbehälter bzw. der Eintrittsöffnung für die angesaugten Schmutzpartikel und der unterdruckerzeugenden Turbine der Filter positioniert. Da die angesaugte, mit Schmutzpartikeln angereicherte Luft durch die Turbine strömen würde und folglich die Turbine verschmutzen bzw. beschädigen würde, dient der Filter zur Reinigung der angesaugten Luft und damit insbesondere zum Schutz der Turbine.

Ein Problem kann jedoch entstehen, wenn der Filter keine ausreichende Filterfunktion mehr leisten kann und angesaugte Schmutzpartikel nicht mehr aus der durch den Filter strömenden Luft herausgefiltert werden können. Dies ist insbesondere der Fall, wenn aufgrund eines länger andauernden Einsatzes des Staubsaugers der Filter zunehmend verschmutzt, d.h. mit Schmutzpartikeln angefüllt ist. Um den Filter funktionsfähig zu halten, muss dieser zwischenzeitlich gereinigt und von den aufgenommenen Schmutzpartikeln befreit werden. Zur Reinigung des Filters muss jedoch bei handelsüblichen Staubsauger der Betrieb desselben abgeschaltet werden und der Sauger geöffnet und der Filter zur Entfernung der aufgenommenen Schmutzpartikel entnommen werden. Derartige Aktivitäten unterbrechen jedoch den Staubsaugvorgang und sind sehr zeitraubend.

Gemäß dem Stand der Technik existieren auch bereits Staubsauger, die eine Vorrichtung zur Abreinigung des Filters aufweisen, ohne dass der Staubsauger hierzu abgeschaltet, geöffnet und der Filter zur Entfernung der aufgenommenen Schmutzpartikel entnommen werden muss. Nachteilig an derartigen Vorrichtungen ist jedoch, dass auch bei diesen Staubsaugern der Saugbetrieb des Staubsaugers während der Abreinigung des Filters unterbrochen werden muss. Auch hierdurch verlängert sich die Arbeit mit dem Staubsauger. Außerdem sind solche bekannten Filterabreinigungsvorrichtungen häufig komplex aufgebaut und aus vielen Komponenten zusammengesetzt. Dadurch sind konventionelle Filterabreinigungsvorrichtungen, wie sie aus dem Stand der Technik bekannt sind, häufig fehler-, verschleiß- oder wartungsanfällig.

Aufgabe der vorliegenden Erfindung ist es daher, die vorstehend beschriebenen Mängel und Nachteile des Standes der Technik zu überwinden und eine verbesserte Filtereinrichtung für einen Staubsauger bereitzustellen, mit der ein Saugbetrieb des Staubsaugers während der Abreinigung des Filters nicht unterbrochen werden muss.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird in einem ersten Aspekt durch eine Filtereinrichtung für einen Staubsauger gelöst, wobei die Filtereinrichtung eine Turbine und einen Motor zum Erzeugen eines ersten Hauptluftstroms und/oder eines zweiten Hauptluftstroms in dem Staubsauger umfasst. Die Filtereinrichtung ist durch eine erste Kammer und eine zweite Kammer gekennzeichnet, die jeweils ein Filterelement, eine Belüftungsöffnung und eine Turbinenöffnung aufweisen, wobei während eines Saugbetriebs durch mindestens eine der Kammern die Turbinenöffnung der jeweiligen Kammer geöffnet ist, so dass eine Strömungsverbindung zwischen der Kammer und der Turbineneinrichtung besteht, und die Belüftungsöffnung geschlossen ist, so dass in der Kammer ein Unterdruck herrscht, wobei ein Abreinigungsvorgang eines Filterelements durch eine Betätigung eines Ventils initiiert wird, so dass ein durch Druckänderung hervorrufender Druckausgleichsstrom in die Kammer gelangt, wobei durch die Druckänderung die Turbinenöffnung durch eine elastische Membran verschlossen und ein Abreinigungsimpuls auf das Filterelement ausgeübt wird.

Tests haben gezeigt, dass die vorgeschlagene Filtereinrichtung für eine hohe und unterbrechungsfreie Absaugleistung - auch während der Filterabreinigung einer der beiden Kammern - sorgt. Durch die elastische Membran und ihre Ausgestaltung, sowie die dadurch gesteuerte Druckverteilung in den unterschiedlichen Bereichen des Staubsaugers kann eine abwechselnde Abreinigung der zwei Kammern bei gleichzeitig fortgeführtem Saugbetrieb der jeweils anderen Kammer ermöglicht werden. Dadurch wird vorteilhafterweise eine hocheffiziente und bauraumoptimierte Möglichkeit zur Filterabreinigung in einem Staubsauger bereitgestellt. Die vorgeschlagene Filtereinrichtung ist insbesondere vergleichsweise einfach aufgebaut. Anwendungstests haben gezeigt, dass die vorgeschlagene Filtereinrichtung besonders robust und wenig anfällig für Reparaturen und Verschleiß ist. Zu diesen Vorteilen der Erfindung trägt insbesondere die elastische Membran bei, die gemäß einer bevorzugten Ausgestaltung der Erfindung ein elastisches Material umfasst und ihre Form verändern oder sich bewegen kann, wenn sie mit einem Druck beaufschlagt wird oder sie eine Änderung der Druckverhältnisse erfährt.

Es ist im Sinne der Erfindung bevorzugt, dass die elastische Membran ein hohes Dehnverhalten im elastischen Bereich aufweist. Beispielsweise sind Dehnungen in einem Bereich zwischen 150 und 300 % möglich. Materialien, die zum Beispiel bei der Herstellung der elastischen Membran verwendet werden können, sind synthetische Kautschuke, wie Chloroprene Rubber (CR) oder Styrene-Butadiene Rubber (SBR/SCR).

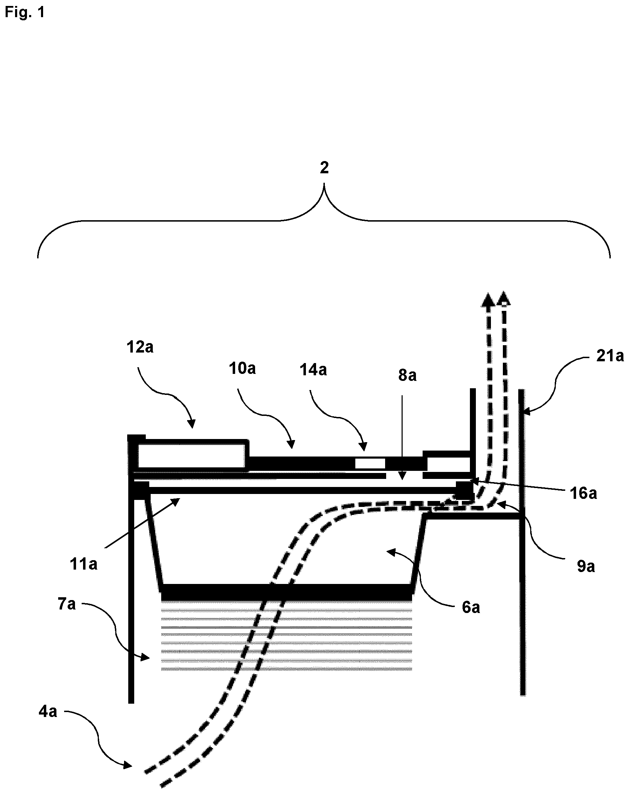

Es ist im Sinne der Erfindung bevorzugt, dass das Schließen der Turbinenöffnung durch eine Formänderung und/oder durch eine Bewegung der elastischen Membran erfolgt. Die elastische Membran liegt vorzugsweise in einem entspannten Zustand vor, wenn in der entsprechenden Kammer des Staubsaugers ein Unterdruck herrscht und die Kammer am Saugbetrieb des Staubsaugers teilnimmt. In diesem entspannten Zustand kann die elastische Membran beispielsweise im Wesentlichen horizontal innerhalb der einer Kammer angeordnet vorliegen. Mögliche Anordnungen der elastischen Membran im entspannten Zustand werden beispielsweise in den Fig. 1 bis 3 dargestellt.

In den Kammern, die am Saugbetrieb des Staubsaugers teilnehmen, liegt die elastische Membran vorzugsweise im entspannten Zustand vor. In diesem Saugbetrieb bildet sich ein Saugstrom vom Staubsammelbehälter des Staubsaugers zur Turbine des Staubsaugers aus, wobei dieser Saug- oder Hauptluftstrom insbesondere durch die am Saugbetrieb teilnehmenden Kammern hindurchströmt. Den Übergang zwischen den Kammern und der Turbine markieren vorzugsweise die Turbinenöffnungen der Kammern. Zwischen den Turbinenöffnungen der Kammern und der Turbine erstrecken sich die Strömungskanalabschnitte, die somit zwischen der Turbine und den Turbinenöffnungen der Kammern angeordnet vorliegen. Es ist im Sinne der Erfindung bevorzugt, dass die Strömungsverbindung zwischen den Kammern und der Turbineneinrichtung von Strömungskanalabschnitten gebildet wird.

Auf dem Weg vom Staubsammelbehälter des Staubsaugers zu seiner Turbine passiert der Saugstrom zunächst die Filterelemente, die dazu eingerichtet sind, einen wesentlichen Anteil des Staubes, mit dem die Luft beladen ist, aufzunehmen und aus dem Saugstrom herauszufiltern. Denn der Staub würde eine Gefahr für die Turbine und den Motor des Staubsaugers darstellen, wenn ein Zuviel an Staub in den Bereich von Turbine oder Motor gelangen würde. Es ist im Sinne der Erfindung bevorzugt, dass in dem vorgeschlagenen Staubsauger bzw. der vorgeschlagenen Filtereinrichtung zwei Filterelemente vorgesehen sind, die jeweils mit einer Kammer verbunden sind. Das heißt, dass sich der durch einen Saugerschlauch-Einlass in den Sammelbehälter eingesaugte Saugstrom in zwei Hauptluftströme aufteilt, wobei ein erster Hauptluftstrom durch die erste Kammer zur Turbine gelangt, während ein zweiter Hauptluftstrom durch die zweite Kammer zur Turbine gelangt. Strömungstechnische sind beiden Kammern die Filterelemente vorgelagert, die den Staub aus den Hauptluftströmen filtern. Der Eingangsbereich der Kammern wird im Sinne der Erfindung bevorzugt als Einströmöffnung bezeichnet, wobei die Eintrömöffnungen gegenüber dem Sammelbehälter von den Filterelementen verschlossen sind.

Es ist im Sinne der Erfindung bevorzugt, dass im Saugbetrieb die Hauptluftströme von dem Staubsammelbehälter, durch die Filterelemente und die Einströmöffnungen in die Kammern gelangen, wobei die Hauptluftströme im Saugbetrieb durch die geöffneten Turbinenöffnungen weiter in die Strömungskanalabschnitte gelangen. Dadurch wird vorteilhafterweise ein Strömungspfad zwischen dem Saugerschlauch-Einlass im Sammelbehälter und der Turbine gebildet.

Im Laufe des Saugbetriebs können sich die Filter der vorgeschlagenen Filtereinrichtung zusetzen. Dies kann beispielsweise dadurch geschehen, dass ein Filterkuchen an dem Filter festbackt bzw. anhaftet und diesen verstopft oder seine Filterleistung reduziert. Um die Filterelemente wieder frei zu bekommen und deren Filterleistung zu erhöhen, kann eine sogenannte Filterabreinigung durchgeführt werden. In diesem Zusammenhang hat sich die Bereitstellung von zwei Kammern mit zwei Filterelementen, die abwechselnd abgereinigt werden können, als sehr vorteilhaft erwiesen. Denn es stellt einen wesentlichen Vorteil der vorgeschlagenen Erfindung dar, dass die Abreinigung des Filterelements einer der beiden Kammern bei fortgesetztem Saugbetrieb durch die andere Kammer erfolgen kann. Dadurch muss der Betrieb des Staubsaugers für die Filterabreinigung nicht unterbrochen werden und der Nutzer hat eine wesentliche Zeitersparnis und Effizienzsteigerung gegenüber herkömmlichen Geräten, die während der Filterabreinigung ausgeschaltet werden müssen. Insbesondere beruhen die Vorteile der Erfindung auf der Aufteilung des Saugstroms in zwei Hauptluftströme, die durch unterschiedliche Kammern strömen können. Ferner trägt zum erfindungsgemäßen Erfolg der vorgeschlagenen Filtereinrichtung die elastische Membran bei, die aufgrund ihrer elastischen Eigenschaften ihre Form ändern kann bzw. beweglich ausgebildet ist, so dass sie im Belüftungs- oder Abreinigungsfall die Turbinenöffnung der abzureinigenden Kammer verschließen kann und einen Abreinigungsimpuls auf das abzureinigende Filterelement ausüben kann.

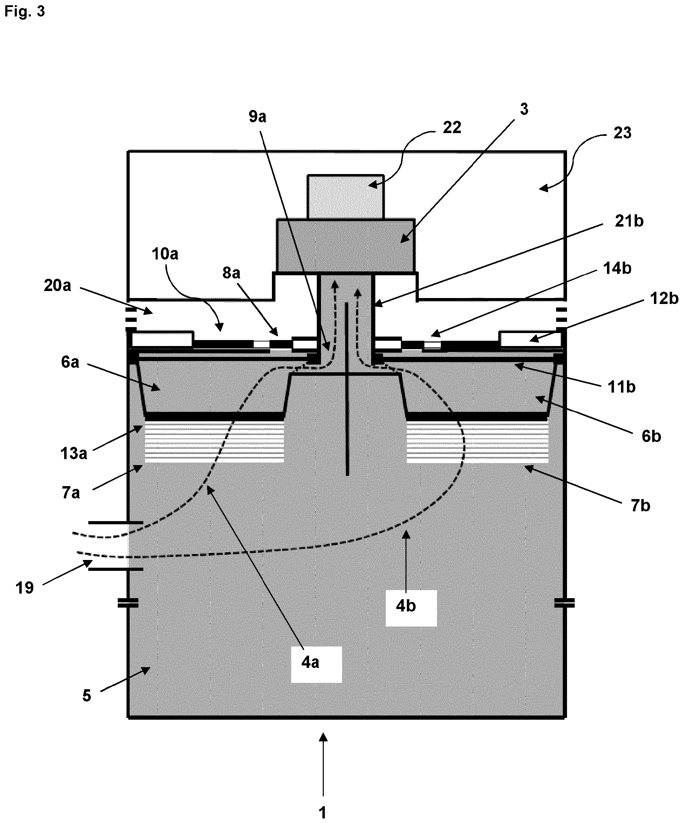

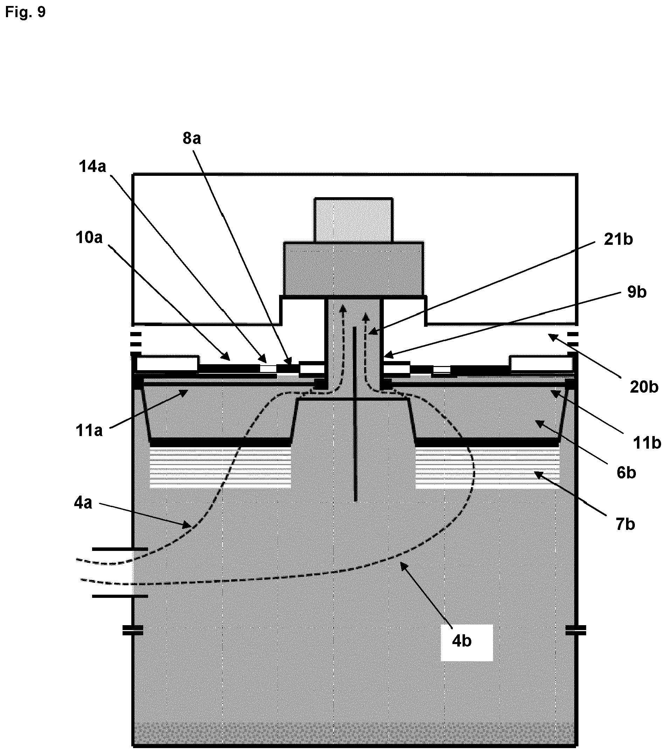

Um einen Abreinigungsvorgang zu initiieren, wird die Kammer, deren Filterelement abgereingt werden soll, belüftet. Der Begriff "Belüftung" wird im Sinne der Erfindung so verwendet, dass damit eine Schwächung oder ein Zusammenbruch des Unterdrucks in der abzureinigenden Kammer bezeichnet wird. Die Belüftung erfolgt vorzugsweise dadurch, dass das Ventil, das jede der beiden Kammern aufweist, in eine Belüftungsstellung gebracht werden kann. Während des Saugbetriebs durch eine Kammer befindet sich das Ventil in einer Saugbetriebsstellung, in der es die Belüftungsöffnung der Kammer verschließt. Dadurch bilden der Staubsammelbehälter, die am Saugbetrieb teilnehmenden Kammern und die Strömungskanalabschnitte, die sich von den Turbinenöffnungen zur Turbine erstrecken, einen Unterdruckbereich innerhalb des Staubsaugers. Diese Unterdruckbereiche sind in den Fig. 3 bis 9 dunkel eingefärbt.

Wenn nun der Abreinigungsvorgang gestartet werden soll, kann das Ventil von der Saugbetriebsstellung in eine Abreinigungsstellung gebracht werden. Dies kann durch eine einfache Schubbewegung des Ventils erfolgen. Vorzugsweise führt die Betätigung des Ventils dazu, dass mit dem Ventil die Belüftungsöffnung geöffnet wird. Es ist im Sinne der Erfindung insbesondere bevorzugt, dass die Ventile von Stellgliedern bewegt werden können. Vorzugsweise können die Ventile Öffnungen aufweisen, wobei diese Öffnungen durch eine Bewegung der Ventile mit den Belüftungsöffnungen im Übereinstimmung gebracht werden können. Wenn die Öffnungen der Ventile mit den Belüftungsöffnungen der abzureinigenden Kammer zusammenfallen, entsteht eine Strömungsverbindung zwischen den Belüftungsöffnungen und Belüftungskanälen, die zwischen dem Staubsauger-Kopf und dem Staubsammelbehälter angeordnet vorliegen und die in fluidischer Verbindung mit der Umgebung des Staubsaugers stehen.

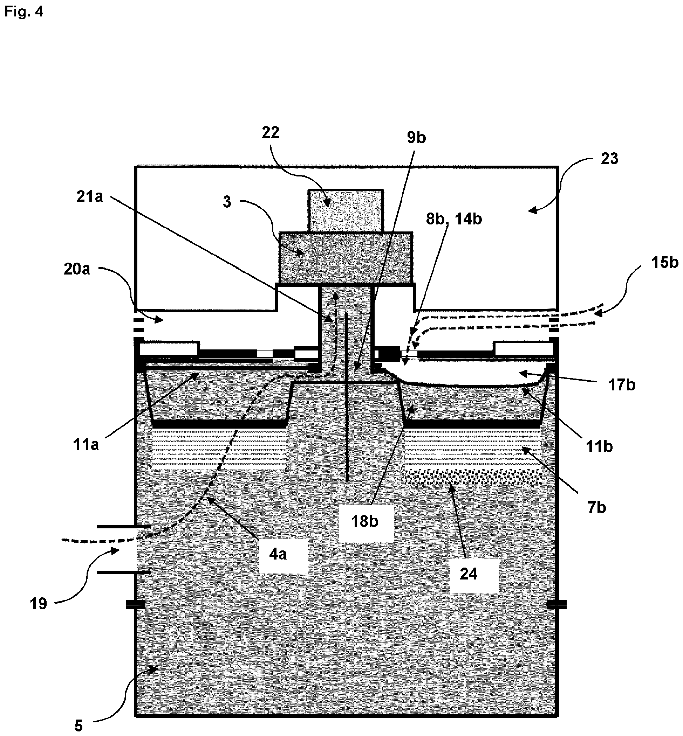

Durch die Belüftungsöffnungen kann ein Luftstrom in die abzureinigende Kammer eindringen, wobei dieser Belüftungsluftstrom im Sinne der Erfindung vorzugsweise auch als Druckausgleichsstrom bezeichnet werden kann. Es ist im Sinne der Erfindung bevorzugt, dass die Belüftungsöffnungen zwischen den Kammern und Belüftungskanälen angeordnet vorliegen. Der Druckausgleichsstrom strömt von der Umgebung des Staubsaugers durch die Belüftungskanäle und die geöffneten Belüftungsöffnungen in die abzureinigende Kammer und sorgt für eine Schwächung oder Reduzierung des dortigen Unterdrucks. Mit anderen Worten sorgt der Druckausgleichsstrom dafür, dass sich der Druck in der abzureinigenden Kammer an dem Außen- oder Umgebungsdruck des Staubsaugers anpasst bzw. angleicht. Der Druckausgleichsstrom ist in den Fig. 4, 5, 7 und 8 als gestrichelter Pfeil angedeutet.

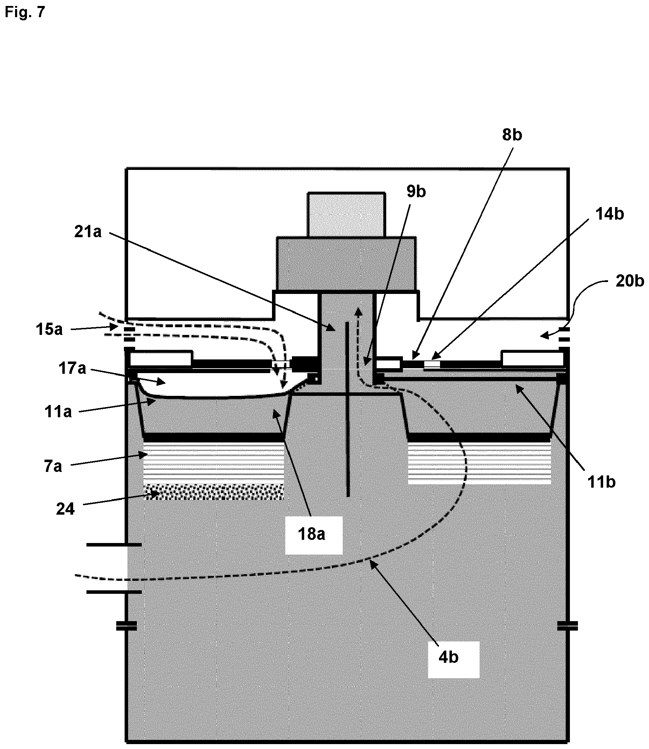

Die Angleichung der Druckverhältnisse in der abzureinigenden Kammer an die Staubsauger-Umgebung bzw. den Umgebungsdruck wird im Sinne der Erfindung bevorzugt auch als Druckänderung bezeichnet, die von dem Druckausgleichsstrom hervorgerufen wird. Es ist im Sinne der Erfindung bevorzugt, dass die Angleichung der Druckverhältnisse bzw. die Druckänderung dazu führt, dass sich die elastische Memran in der abzureinigenden Kammer bewegt und/oder ihre Form verändert. Insbesondere kann die elastische Membran aus ihrem entspannten Saugbetriebszustand in einen druckbeaufschlagten Zustand übergehen. Beispielsweise kann die elastische Membran von einem ersten, entspannten Zustand in einen zweiten Zustand übergehen, wobei die Membran in diesem zweiten Zustand beispielsweise die Turbinenöffnung der abzureinigenden Kammer abschließt. Dieses Abschließen der Turbinenöffnung durch die elastische Membran wird beispielsweise in den Fig. 4 und 7 dargestellt. Es ist im Sinne der Erfindung bevorzugt, dass die elastische Membran im ersten, entspannten Zustand die Turbinenöffnung freilässt und den Hauptluftstrom durch die entsprechende Kammer des Staubsaugers durchlässt. Mit anderen Worten kann sich im Saugbetrieb eine Hauptluftströmung von dem Sammelbehälter bis zur Turbine ausbilden, wobei dieser Hauptluftstrom die Kammer, die am Saugbetrieb teilnimmt, von der elastischen Membran ungehindert, passieren kann. Es ist im Sinne der Erfindung ferner bevorzugt, dass die elastische Membran im zweiten, druckbeaufschlagten Zustand die Turbinenöffnung verschließt, so dass der Hauptluftstrom durch die entsprechende Kammer des Staubsaugers blockiert wird und der Saugbetrieb durch diese Kammer unterbrochen wird.

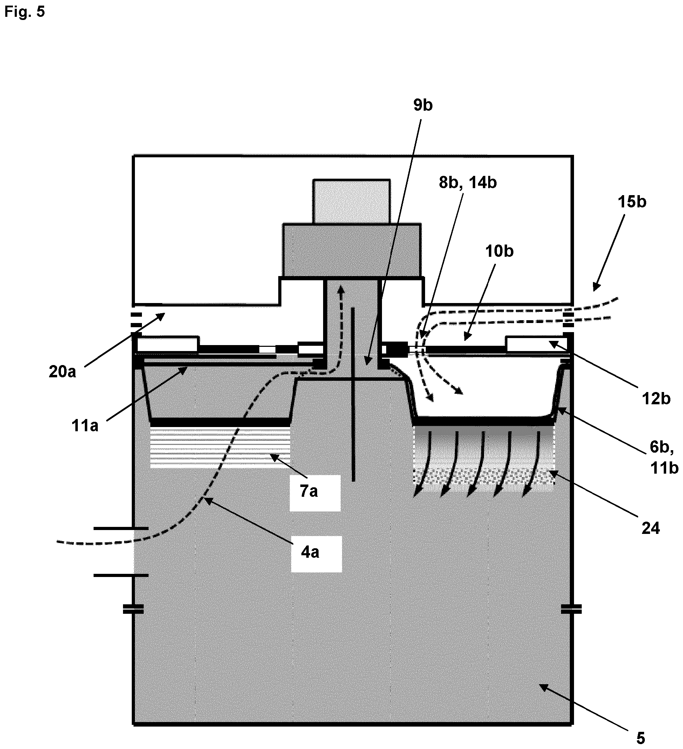

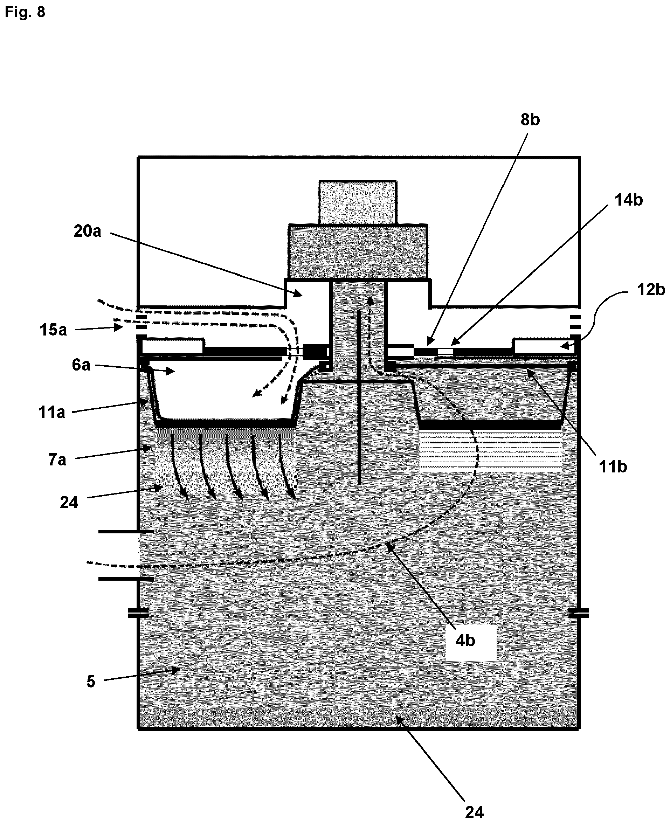

Es ist im Sinne der Erfindung bevorzugt, dass die elastischen Eigenschaften der elastischen Membran so ausgestaltet sind, dass die elastische Membran im Falle der Belüftung weiterbewegen und sich beispielsweise an die Innenwände der abzureinigenden Kammer anlegen kann (vgl. Fig. 5 und 8). Das Anlegen der elastischen Membran an die Innenwände der abzureinigenden Kammer kann im Sinne der Erfindung als dritter Zustand der elastischen Membran bezeichnet werden. Es ist im Sinne der Erfindung bevorzugt, dass der Übergang der elastischen Membran von dem ersten Zustand in den zweiten Zustand oder dritten Zustand, oder zurück, als Formänderung oder Bewegung der elastischen Membran bezeichnet wird. Vorzugsweise kann die elastische Membran nicht nur diese drei beschriebenen Zustände, sondern auch alle denkbaren Zwischenschritte oder -zustände einnehmen.

Insbesondere ist die elastische Membran vorzugsweise dazu eingerichtet, die Luft, die sich zuvor zwischen der Membran und dem abzureinigenden Filterelement befand, derart zu komprimieren, dass sich ein Druckstoß ausbildet, der im Sinne der Erfindung als Abreinigungsimpuls oder Abreinigungsstoß bezeichnet wird. Dieser Kompressionsdruckstoß wird auf das Filterelement übertragen und führt vorteilhafterweise zu einer Rückspülung des Filters und/oder zu einer mechanischen Erschüttung des Filterelements. Die Intensität bzw. die Stärke des Abreinigungsimpuls ist vorzugsweise so ausgelegt, dass sich festgebackener Filterkuchen von dem Filterelement löst und in den Staubsammelbehälter des Staubsaugers hinabfällt, so dass er zu einem späteren Zeitpunkt entsorgt werden kann. Die Übertragung des Kompressionsdruckstoß wird im Sinne der Erfindung auch als Ausübung eines Abreinigungsimpulses auf das Filterelement bezeichnet.

Der obere Bereich des Staubsaugers kann von einem Staubsauger-Kopf gebildet werden, während der untere Bereich des Staubsaugers von dem Staubsammelbehälter gebildet wird. In dem Staubsauger-Kopf liegen beispielsweise die Turbine und der Motor vor, mit denen der Unterdruck zum Einsaugen der Staubpartikel und des Bohrmehls erzeugt wird. Zwischen dem Staubsauger-Kopf und dem Staubsammelbehälter sind Belüftungskanäle vorgesehen, mit denen Luft aus der Umgebung des Staubsaugers durch Öffnungen im Gehäuse eingesaugt werden kann. Diese durch die Belüftungskanäle eingesaugte Luft kann beispielsweise einen Druckausgleichsstrom bilden, mit dem ein Druckausgleich in der abzureinigenden Kammer bzw. eine Anpassung des dort herrschenden Drucks an einen Umgebungsdruck bewirkt wird. Der Sammelbehälter kann ferner einen Saugerschlauch-Einlass aufweisen, an den ein Staubsaugerschlauch angeschlossen werden kann. Es ist im Sinne der Erfindung bevorzugt, dass die Belüftungskanäle zwischen einem Staubsammelbehälter und einem Staubsauger-Kopf des Staubsaugers angeordnet vorliegen.

Es ist im Sinne der Erfindung bevorzugt, dass die Turbinenöffnung dazu eingerichtet ist, eine Strömungsverbindung zwischen einer der Kammern und der Turbine zu ermöglichen, wobei diese Strömungsverbindung zwischen den Kammern und der Turbineneinrichtung insbesondere bei Betrieb des Staubsaugers besteht. Vorzugsweise wird die Strömungsverbindung von einem Strömungskanalabschnitt gebildet, der zwischen der Turbinenöffnung einer der Kammern und der Turbine gebildet wird. Dieser Strömungskanalabschnitt ist insbesondere bei Betrieb des Staubsaugers geöffnet, damit der von der Turbine erzeugte Unterdruck zum Ein- bzw. Aufsaugen von Staub verwendet werden kann.

Es ist im Sinne der Erfindung bevorzugt, dass in der entsprechenden Kammer ein Unterdruck vorliegt, wenn die zugehörige Belüftungsöffnung verschlossen und die Turbinenöffnung geöffnet ist. In diesem Fall erfolgt durch die entsprechende Kammer ein Absaugbetrieb und Staubpartikel können mit dem zugehörigen Hauptluftstrom in den Sammelbehälter eingesaugt werden. Es ist im Sinne der Erfindung ferner bevorzugt, dass während des Saugbetriebs durch die eine Kammer das Filterelement in der anderen Kammer abgereinigt werden kann.

Es ist im Sinne der Erfindung bevorzugt, dass die Belüftungskanäle zwischen dem Sammelbehälter und dem Saugerkopf angeordnet vorliegen. Der Sammelbehälter bildet den unteren Bereich des Staubsaugers, in dem der von dem Staubsauger eingesaugte Staub aufgefangen und bis zu einer Leerung des Staubsaugers aufbewahrt wird. Es ist im Sinne der Erfindung bevorzugt, dass die erste und die zweite Kammer Bestandteil des Sammelbehälters sind. Mit anderen Worten liegen die erste Kammer und die zweite Kammer in dem Sammelbehälter des Staubsaugers angeordnet vor. In einer bevorzugten Ausgestaltung der Erfindung weisen die Kammern Einströmöffnungen auf, die gegenüber dem Sammelbehälter mit Filterelementen abgegrenzt sind. Vorzugsweise sind die Filterelemente dazu eingerichtet, die Einströmöffnungen so zu verschließen, dass Staubpartikel aus den Hauptluftströmen herausgefiltert werden können, wobei sich die Hauptluftströme im Saugbetrieb zwischen dem Saugschlaucheinlass des Staubsammelbehälters und der Turbine ausbilden. Es sind diese Filterelemente zwischen den Kammern und dem restlichen Volumen des Sammelbehälters, die im Kontext der vorliegenden Erfindung abgereinigt werden sollen. Durch die direkte und unmittelbare Verbindung zwischen den Filterelementen und dem Sammelbehälter können Staubpartikel und Filterkuchen, die bei der Abreinigung von den Filterelementen gelöst werden, direkt in den Sammelbehälter gelangen und bei der nächsten Leerung des Behälters entsorgt werden.

Der Saugerkopf bildet vorzugsweise den oberen Bereich des Staubsaugers; er wird vorzugsweise auch als "Staubsauger-Kopf" bezeichnet. Der Saugerkopf umfasst vorzugsweise die Turbineneinrichtung des Staubsaugers, sowie einen Motor. Zwischen dem Saugerkopf und dem Sammelbehälter liegen Belüftungskanäle angeordnet vor, die nach außen, d.h. gegenüber der Umgebung des Staubsaugers, von Teilbereichen des Saugergehäuses begrenzt werden können. Diese Teilbereiche des Saugergehäuses weisen vorzugsweise Lüftungsöffnungen oder Lüftungsschlitze auf, durch die Luft in das Innere des Staubsaugers eingesaugt werden kann. Es ist im Sinne der Erfindung insbesondere bevorzugt, dass die Luft in die Belüftungskanäle eingesaugt wird, wobei die Luft von dort in die Kammern der vorgeschlagenen Filtereinrichtung gelangen kann. Der Luftstrom von dem Belüftungskanal in die abzureinigende Kammer bildet in einer besonders bevorzugten Ausgestaltung der Erfindung einen Druckausgleichsstrom, der durch das geöffnete Ventil und durch die Belüftungsöffnung von dem Belüftungskanal in die Kammer gelangen kann. Mit anderem Worten kann bei Öffnen der Ventile ein Druckausgleichsstrom in die Kammern des Staubsaugers gelangen. Es ist im Sinne der Erfindung bevorzugt, dass die Ventile mit je einem Stellelement verschoben, d.h. geöffnet oder geschlossen, werden können.

Es ist im Sinne der Erfindung bevorzugt, dass bei Betrieb des Staubsaugers in dem Sammelbehälter und in mindestens einer der beiden Kammern ein Unterdruck herrscht. Vorzugsweise kann der Unterdruck von der Turbineneinrichtung im Saugerkopf erzeugt werden. Mit Hilfe des Unterdrucks können Staubpartikel oder Bohrmehl in das Innere des Staubsaugers eingesaugt werden. Der Sammelbehälter des Staubsaugers weist vorzugsweise einen Saugerschlauch-Einlass auf, durch den die Staubpartikel oder das Bohrmehl eingesaugt werden kann, insbesondere wenn der Einlass mit einem Saugerschlauch verbunden ist und der Staubsauger im Saugbetrieb betrieben wird. Der Saugbetrieb ist vorzugsweise dadurch gekennzeichnet, dass der Staubsauger mit seiner Turbineneinrichtung einen Unterdruck erzeugt. Durch den Saugbetrieb werden Hauptluftströme durch die Kammern des Staubsaugers, die am Saugbetrieb teilnehmen, erzeugt, wobei die Hauptluftströme vorzugsweise von dem Saugerschlauch-Einlass zu der Turbineneinrichtung strömen.

In einem zweiten Aspekt betrifft die Erfindung ein Verfahren zum Abreinigen einer Filtereinrichtung in einem Staubsauger, wobei das Verfahren durch die folgenden Schritte gekennzeichnet ist:
a) Bereitstellung einer vorgeschlagenen Filtereinrichtung in einem Staubsauger,
b) Betrieb des Staubsaugers, wobei bei Betrieb des Staubsaugers in einem Sammelbehälter des Staubsaugers und in mindestens einer Kammer des Staubsaugers ein Unterdruck herrscht,
c) Betätigung eines Ventils, wodurch eine Belüftungsöffnung geöffnet wird, so dass ein eine Druckänderung hervorrufender Druckausgleichsstrom in die Kammer gelangt und durch die Druckänderung eine Turbinenöffnung der Kammer durch eine elastische Membran verschlossen wird,
d) Abreinigung eines Filterelements durch einen Abreinigungsimpuls, der von der elastischen Membran auf das Filterelement ausgeübt wird.

Es ist im Sinne der Erfindung bevorzugt, dass der bereitzustellende Staubsauger eine Filtereinrichtung aufweist, die über zwei Kammern mit je einem Filterelement, einer Belüftungsöffnung und einer Turbinenöffnung verfügt. In den Kammern sind jeweils elastische Membranen vorgesehen, die bei unterschiedlichen Druckverhältnissen in den Kammern unterschiedlichen Formen bzw. Zustände einnehmen können. Beispielsweise können die elastischen Membranen in einem entspannten Zustand in einer im Wesentlichen horizontalen Anordnung in den Kammern vorliegen, wobei dieser entspannte Zustand insbesondere während eines Saugbetriebs des Staubsaugers eingenommen wird. Es ist im Sinne der Erfindung bevorzugt, dass in den Kammern, die am Saugbetrieb teilnehmen, ein Unterdruck herrscht.

Es ist im Sinne der Erfindung bevorzugt, dass sich die elastischen Membranen bewegen oder ihre Form, d.h. ihren Zustand, ändern können, wenn sich die Druckverhältnisse in den Kammern ändern. Wenn beispielsweise eine der Kammern belüftet wird und sich der Druck in der belüfteten, abzureinigenden Kammer an den Umgebungsdruck angleicht, kann sich die elastische Membran verbiegen und zum Beispiel einen zweiten Zustand annehmen, wobei die elastische Membran in diesem zweiten Zustand die Turbinenöffnung der entsprechenden Kammer abdichtet (vgl. Fig. 4 und 7). Das Verbiegen kann insbesondere auch eine Verformung der elastischen Membran bzw. des elastischen Materials beinhalten. Durch die Abdichtung der Turbinenöffnung wird der Hauptluftstrom durch diese Kammer blockiert und die Kammer nimmt nicht mehr am Saugbetrieb des Staubsaugers teil, während der Saugbetrieb des Staubsaugers von der anderen Kammer, die nicht belüftet wird, aufrechterhalten wird.

Die elastische Membran kann sich weiter, stärker verbiegen oder verformen und beispielsweise einen dritten Zustand annehmen, in dem die elastische Membran an den Innenwänden der abzureinigenden Kammer anliegt (vgl. Fig. 5 und 8). In diesem Zustand komprimiert die elastische Membran die Luft, die sich zuvor zwischen Filterelement und Membran befand, so stark, dass ein Druckstoß auf das Filterelement übertragen wird. Der Druckstoß bewirkt eine mechanische Erschütterung des Filterelements, wobei durch die Erschütterung etwaiger an dem Filterelement anhaftender Filterkuchen gelöst wird, so dass er in den Staubsammelbehälter fallen kann. Es ist im Sinne der Erfindung bevorzugt, den ersten oder den entspannten Zustand der elastischen Membran als Parkzustand oder Parkposition zu bezeichnen, während der zweite Zustand, in dem die elastische Membran die Turbinenöffnung verschließt als Schließstellung bezeichnet werden kann. Vorzugsweise kann der dritte Zustand der elastischen Membran als Abreinigungszustand, Abreinigungsposition oder Abreinigungsstellung bezeichnet werden.

Es ist im Sinne der Erfindung bevorzugt, dass durch die Betätigung des Ventils die Belüftungsöffnung der abzureinigenden Kammer geöffnet wird, so dass ein Belüftungs- oder Druckausgleichsstrom in die Kammer eindringen kann. Dieser Belüftungs- oder Druckausgleichsstrom ist vorzugsweise dazu eingerichtet, die Formänderung oder Bewegung der elastischen Membran zu bewirken, die zu den Zustandsänderungen der elastischen Membran führen. Es ist im Sinne der Erfindung bevorzugt, dass die Zustandsänderungen der elastischen Membran einen Abreinigungsimpuls erzeugen, mit dem die Abreinigung des Filterelements bewirkt wirkt. Vorzugsweise ist die elastische Membran dazu eingerichtet, einen Abreinigungsimpuls auf das Filterelement auszuüben. Es ist im Sinne der Erfindung insbesondere bevorzugt, dass der Abreinigungsimpuls von einer Bewegung, Form-, Positions- oder Zustandsänderung der elastischen Membran erzeugt wird.

Es stellt einen wesentlichen Vorteil der Erfindung dar, dass die Abreinigung des Filterelements einer der beiden Kammern bei fortgesetztem Saugbetrieb durch die andere Kammer erfolgt. Insbesondere kann mit der vorgeschlagenen Filtereinrichtung, d.h. insbesondere mit der elastischen Membran, ein druckgesteuertes Ventil für die Turbinenöffnungen der Kammern bereitgestellt werden, wobei sich die Filtereinrichtung darüber hinaus kompakt in einen Staubsauger integrieren lässt. Ferner lässt sich mit der Erfindung ein robuster Grundaufbau eines Staubsaugers realisieren, da die vorgeschlagene Filtereinrichtung eine vergleichsweise geringe Zahl mechanischer Komponenten aufweist. Einen besonderen Vorteil der Erfindung stellt die außergewöhnlich große Kompressionsrate dar, mit der die verbliebene Luft innerhalb der abzureinigenden Kammer komprimiert wird, wenn die elastische Membran von dem zweiten Zustand in den dritten Zustand übergeht. Durch diese überraschend hohe Kompressionsrate kann insbesondere eine besonders wirkungsvolle Abreinigungseffizienz durch ein vergleichsweise geringes zu bewegendes Luft-Restvolumen erreicht werden.

Insbesondere betrifft die Erfindung auch einen Staubsauger mit einer erfindungsgemäßen Filtereinrichtung. Die für die vorgeschlagene Filtereinrichtung beschriebenen Definitionen, technischen Wirkungen und Vorteile gelten für das vorgeschlagene Filterabreinigungsverfahren und den Staubsauger, der eine vorgeschlagene Filtereinrichtung aufweist, analog.

Es ist im Sinne der Erfindung bevorzugt, dass die Ventile als Schieberventile ausgebildet sind. Sie stellen Regelelement dar, mit denen die Turbinenöffnung oder die Belüftungsöffnung verschlossen oder freigegeben werden können. Die Schieberventile können als flache Elemente ausgebildet sein, wobei im Sinne der Erfindung auch runde oder andere Formen bevorzugt sein können.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: schematische Seitenansicht einer bevorzugten Ausführungsform der vorgeschlagenen Filtereinrichtung
- Fig. 2: schematische Darstellung des Staubsaugers, während beide Kammern am Saugbetrieb teilnehmen
- Fig. 3: weitere schematische Darstellung des Staubsaugers, während beide Kammern am Saugbetrieb teilnehmen, insbesondere die Druckverhältnisse im Staubsauger
- Fig. 4: schematische Darstellung des Staubsaugers, während das Filterelement der zweiten Kammer abgereinigt wird
- Fig. 5: schematische Darstellung des Staubsaugers, während das Filterelement der zweiten Kammer abgereinigt wird
- Fig. 6: schematische Darstellung des Staubsaugers am Ende des Abreinigungsvorgangs der zweiten Kammer
- Fig. 7: schematische Darstellung des Staubsaugers, während das Filterelement der ersten Kammer abgereinigt wird
- Fig. 8: schematische Darstellung des Staubsaugers, während das Filterelement der ersten Kammer abgereinigt wird
- Fig. 9: schematische Darstellung des Staubsaugers am Ende des Abreinigungsvorgangs der ersten Kammer

### Ausführungsbeispiele und Figurenbeschreibung:

Fig. 1 zeigt eine schematische Seitenansicht einer bevorzugten Ausführungsform der vorgeschlagenen Filtereinrichtung 2. Aus Gründen der besseren Übersicht ist in Fig. 1 eine erste Kammer 6a dargestellt, die in den Fig. 3 bis 9 der linken der beiden Kammern 6a, 6b entspricht. Dargestellt ist in Fig. 1 die erste Kammer 6a, die eine erste Einströmöffnung 13a, eine erste Belüftungsöffnung 8a, sowie eine Turbinenöffnung 9a aufweist. Die erste Kammer 6a liegt in einem oberen Bereich des Staubsammelbehälter 5 des Staubsaugers 1 angeordnet vor und wird gegenüber dem Staubsammelbehälter 5 mit einem Filterelement 7a verschlossen. Wenn im Saugbetrieb ein erster Saugstrom 4a von dem Staubsammelbehälter 5 in Richtung der Turbine 3 des Staubsaugers 1 strömt, passiert die staubbeladene Luft das Filterelement 7a, wobei ein großer Teil des Staubs aus dem Saugstrom 4a herausgefiltert wird. Auf diese Weise werden die Turbine 3 und der Motor 22 des Staubsaugers 1 vor einer Verschmutzung geschützt. Der Saugstrom 4a wird in Fig. 1 durch die gestrichelten Pfeile symbolisiert.

Innerhalb der ersten Kammer 6a ist eine elastische Membran 11a angeordnet, die in dem in Fig. 1 dargestellten Ausführungsbeispiel im entspannten oder ersten Zustand vorliegt. Dieser Zustand der elastischen Membran 11a wird im Sinne der Erfindung vorzugsweise auch als Saugbetriebszustand bezeichnet. In diesem Zustand behindert oder blockiert die elastische Membran 11a den Saugstrom durch die erste Kammer 6a nicht, sondern lässt in stattdessen im Wesentlichen ungehindert passieren. Es ist im Sinne der Erfindung bevorzugt, dass die elastische Membran 11a in dem ersten Zustand im Wesentlichen eben in horizontaler Anordnung in der ersten Kammer 6a vorliegt, wobei die elastische Membran 11a an den Seitenwänden der ersten Kammer 6a fixiert ist. Insbesondere kann die elastische Membran 11a zwischen Vorsprüngen der Seitenwände der ersten Kammer 6a eingeklemmt bzw. befestigt sein. Es sind jedoch auch andere Befestigungsmethoden denkbar, solange diese eine Beweglichkeit der elastischen Membran 11a innerhalb der ersten Kammer 6a ermöglichen. Die elastische Membran 11a ist insbesondere dazu eingerichtet, dass sich ein Innenbereich der Membran 11a innerhalb der ersten Kammer 6a bewegen kann. Diese Beweglichkeit verdankt die elastische Membran 11a vorteilhafterweise ihren hochelastischen Eigenschaften. Die Beweglichkeit der elastischen Membran 11a kann auch durch eine Form- oder Zustandsänderung der elastischen Membran 11a zum Ausdruck kommen. Der Begriff «Form- oder Zustandsänderung» bedeutet im Sinne der Erfindung bevorzugt, dass sich die elastische Membran 11a beispielsweise verbiegen oder in ihrer Form an andere Gegenstände anpassen bzw. anlegen kann, wobei eine solche Form- oder Zustandsänderung der elastischen Membran 11a insbesondere durch eine Änderung der Druckverhältnisse in der Kammer 6a bewirkt wird. Dies kann beispielsweise dann der Fall sein, wenn der im Saugbetrieb in der Kammer 6a herrschende Unterdruck durch ein Belüften der Kammer 6a geschwächt wird, so dass sich der Druck in der Kammer 6a an den Druck in der Umgebung des Staubsaugers ("Umgebungsdruck") anpasst bzw. angleicht. Je nach Stärke der Druckänderung kann sich die elastische Membran 11a mehr oder weniger stark verbiegen oder bewegen und beispielsweise einen Schließzustand einnehmen (vgl. Fig. 4 und 7), in dem die elastische Membran 11a eine Turbinenöffnung 9a der Kammer 6a verschließt, oder die elastische Membran 11a kann einen Abreinigungszustand einnehmen (vgl. Fig. 5 und 8), in dem sich die elastische Membran 11a an die inneren Seitenwände der Kammer 6 anlegt und auf dem Weg dorthin die in der Kammer 6 verbliebene Restluft so stark komprimiert, dass es Abreinigungs- oder Druckstoßimpuls auf das abzureinigende Filterelement 7 ausgeübt wird. Dieser Abreinigungsimpuls bewirkt eine mechanische Erschütterung des Filterelements 7, welche zu einer Abreinigung des Filterelements 7a führt.

Die Belüftung der ersten Kammer 6a kann durch eine Betätigung des Ventils 10a bewirkt werden. Durch eine Verschiebung des Ventils 10a kann die Belüftungsöffnung 8a der Kammer 6a freigegeben bzw. geöffnet werden. Vorzugsweise kann das Ventil 10a mit Hilfe eines Stellglieds 12a von einer Saugbetriebsstellung (Ventil 10a verschließt die Belüftungsöffnung 8a) in eine Belüftungsstellung (Ventil 10a gibt die Belüftungsöffnung 8a frei) gebracht werden. In der Belüftungsstellung kann ein Druckausgleichsstrom 15 aus einem Belüftungskanal 20a in die Kammer 6a eindringen und so eine Druckänderung in der Kammer 6a bewirken. Die Drückänderung besteht vorzugsweise darin, dass ein im Saugbetrieb der Kammer 6a herrschender Unterdruck entweicht und durch einen Umgebungsdruck, der dem Druck in der Umgebung des Staubsaugers 1 entspricht, ersetzt wird. Das Ventil 10a kann Öffnungen 14a aufweisen, die durch das Verschieben des Ventils 10a mit der Belüftungsöffnung 8a zusammenfallen können, so dass die Belüftungsöffnung 8a der Kammer 6a freigeben wird, so dass der Druckausgleichsstrom 15 aus dem Belüftungskanal 20a in die abzureinigende Kammer 6a eindringen kann.

Fig. 1 zeigt schematisch eine erste Kammer 6a der vorgeschlagenen Filtereinrichtung 2 im Saugbetrieb, in dem die Turbinenöffnung 9a der ersten Kammer 6a geöffnet und die Belüftungsöffnung 8a der ersten Kammer 6a geschlossen vorliegt. Der Saugstrom 4a ström vom Staubsammelbehälter 5 durch die erste Kammer 6a und verlässt diese im Bereich der Turbinenöffnung 9a. Die Turbinenöffnung 9a mündet in einem Strömungskanalabschnitt 21a, der die Turbinenöffnung 9a der ersten Kammer 6a mit der Turbine 3 verbindet. Es kann im Kontext der Erfindung vorgesehen sein, dass zwischen der Kammer 6a und dem Strömungskanalabschnitt 21a eine weitere Öffnung vorliegt, die als Bypass-Kapillare 16a bezeichnet wird. Es ist im Sinne der Erfindung bevorzugt, dass die Bypass-Kapillare 16a dazu eingerichtet ist, für gleiche oder im Wesentlichen gleiche Druckverhältnisse oberhalb und unterhalbe der Membran 11 zu sorgen, um die Parkposition der Membranen 11a, 11b sicherzustellen.

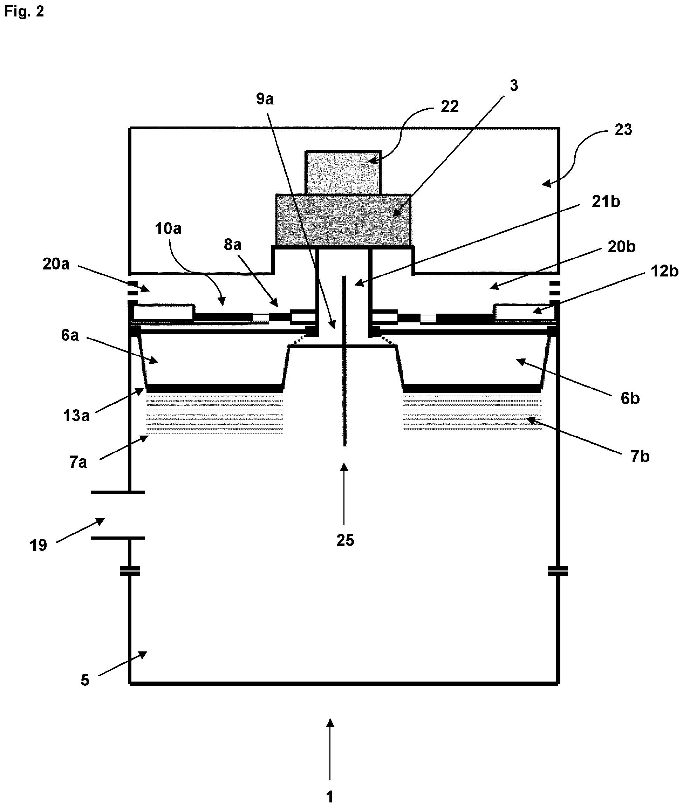

Fig. 2 zeigt eine schematische Darstellung des Staubsaugers 1, während beide Kammern 6a, 6b des Staubsaugers 1 am Saugbetrieb teilnehmen. In einem unteren Bereich des Staubsaugers 1 ist der Staubsammelbehälter 5 dargestellt, der einen Saugschlauch-Einlass 19 aufweist. An diesen Saugschlauch-Einlass 19 kann ein Saugschlauch angeschlossen werden, der beispielsweise mit einer Bodendüse verbunden sein kann. Durch den Saugschlauch können Staubpartikel oder Bohrmehl eingesaugt werden. Der eingesaugte Staub gelangt dann durch den Saugschlauch-Einlass 19 in den Staubsammelbehälter 5 des Staubsaugers 1.

Der obere Bereich des Staubsaugers 1 wird von einem Staubsauger-Kopf 23 gebildet. In dem Staubsauger-Kopf liegen beispielsweise die Turbine 3 und der Motor 22 vor, mit denen der Unterdruck zum Einsaugen der Staubpartikel und des Bohrmehls erzeugt wird. Zwischen dem Staubsauger-Kopf 23 und dem Staubsammelbehälter 5 sind Belüftungskanäle 20a und 20b vorgesehen, mit denen Luft aus der Umgebung des Staubsaugers 1 durch Öffnungen im Gehäuse eingesaugt werden kann. Diese durch die Belüftungskanäle 20, 20b eingesaugte Luft kann beispielsweise einen Druckausgleichsstrom 15 bilden, wenn in dem Staubsauger 1 ein Druckausgleich stattfinden soll. Druckausgleichströme 15 sind beispielsweise in den Fig. 4, 5, 7 und 8 dargestellt. Druckausgleichströme 15 können beispielsweise verwendet werden, um den Unterdruck innerhalb des Staubsaugers 1 zu schwächen und den Saugstrom 4a, 4b in einer der Kammern 6a, 6b zu unterbrechen, um einen Filterabreinigung durchzuführen. Eine Abreinigung der Filterelemente 7a, 7b ist beispielsweise dann vonnöten, wenn die Filterelemente 7a, 7b der vorgeschlagenen Filtereinrichtung 2 mit Staub zugesetzt sind. Der zunächst lose Staub kann zu einem Filterkuchen 24 zusammenbacken, der nur schwer aus den Filterelementen 7a, 7b gelöst werden kann. Mit der vorliegenden Erfindung kann vorteilhafterweise eine besonders wirkungsvolle Filterabreinigung bereitgestellt werden, bei der insbesondere der Saugbetrieb des Staubsaugers 1 während der Filterabreinigung nicht unterbrochen werden muss.

Zwischen dem Staubsammelbehälter 5 und dem Staubsauger-Kopf 23 sind zwei Kammern 6a, 6b vorgesehen, deren Filter 7a, 7b erfindungsgemäß abwechselnd abgereinigt werden können, während in der jeweils anderen Kammer 6a, 6b der Saugbetrieb des Staubsaugers 1 fortgesetzt werden kann. Die Kammern 6a, 6b sind im Wesentlichen gleich ausgebildet, allerdings achsensymmetrisch zu einer die beiden Kammern trennenden Trennwand 25.

In Fig. 2 befinden sich beide Kammern 6a, 6b im Saugbetrieb und die elastischen Membrane 11a, 11b liegen im entspannten bzw. Saugbetriebszustand vor. In diesem kann ein Saugstrom 4a, 4b von dem Sammelbehälter 5 des Staubsaugers 1 in den Bereich der Turbine 3 gelangen, wobei die Saugströme 41a, 4b dabei die Kammern 6a, 6b passieren. Insbesondere strömen die Saugströme 4a, 4b auf ihrem Weg dabei durch die Turbinenöffnungen 9a, 9b, die zwischen den Kammern 6a, 6b und den Strömungskanalabschnitten 21a, 21b liegen. Die Strömungskanalabschnitte 21a, 21b verbinden die Turbinenöffnungen 9a, 9b mit der Turbine 3 und erstrecken sich dazwischen.

Die Kammern 6a, 6b weisen ferner Belüftungsöffnungen 8a, 8b auf, die mit Ventilen 10a, 10b geöffnet oder verschlossen werden können. Die Ventile 10a, 10b können mit Stellgliedern 12a, 12b bewegt werden und weisen Öffnungen 14a, 14b auf, die mit den Belüftungsöffnungen 8a, 8b der Kammern 6a, 6b zusammenfallen können. Wenn die Öffnungen 14a, 14b der Ventile 10a, 10b mit den Belüftungsöffnungen 8a, 8b der Kammern 6a, 6b zusammenfallen, liegen die Belüftungsöffnungen 8a, 8b geöffnet vor und ein Druckausgleichsstrom 15 kann in eine abzureinigende Kammer 6a oder 6b eindringen, wodurch der Unterdruck, der im Saugbetrieb in der Kammer 6a, 6b herrscht, geschwächt wird oder durch den Umgebungsdruck ersetzt wird. Der Druckausgleichsstrom 15 gelangt von der Umgebung des Staubsaugers 1 über einen Belüftungskanal 20a, 20b in die Kammern 6a, 6b.

Fig. 3 zeigt eine weitere schematische Darstellung des Staubsaugers 1, während beide Kammern 6a, 6b am Saugbetrieb teilnehmen. Insbesondere zeigt Fig. 3 die Druckverhältnisse im Staubsauger 1 während des Saugbetriebs. In die Fig. 3 bis 9 sind Bereiche des Staubsaugers 1, in denen ein Unterdruck herrscht, dunkel eingefärbt. Im Saugbetrieb herrscht insbesondere im Staubsammelbehälter 5, in den Kammern 6a, 6b, die am Saugbetrieb teilnehmen, und in den Strömungskanalabschnitten 21a, 21b ein Unterdruck vor. Die gestrichelten Linien in Fig. 3 verdeutlichen die Strömungspfade der Saugluftströme 4a, 4b durch den Staubsauger 1.

Fig. 4 zeigt eine schematische Darstellung des Staubsaugers 1, während das Filterelement 7b der zweiten Kammer 6b abgereinigt wird. Um den Abreinungsprozess zu starten, wird das Ventil 10b betätigt und die Belüftungsöffnung 8b dadurch geöffnet. Ein Druckausgleichsstrom 15b kann in die Kammer 6b eindringen und für einen Druckausgleich sorgen. Der Druckausgleich sorgt vorzugsweise dafür, dass der Unterdruck, der während des Saugbetriebs in der Kammer 6b herrschte, durch einen Umgebungsdruck ersetzt wird. Mit anderen Worten passt sich der Druck in der Kammer 6b an den Umgebungsdruck an, wenn die Kammer 6b belüftet wird und ein Druckausgleichsstrom 15b durch die Belüftungsöffnung 8b in die Kammer 6b strömt. Der Druckausgleichsstrom 15b wird in Fig. 4 mit gestrichelten Pfeilen in der rechten Bildhälfte dargestellt.

Durch den Druckausgleich nimmt die elastische Membran 11b in der Kammer 6b eine Form- bzw. Zustandsänderung vor, so dass sie die Turbinenöffnung 9b der abzureinigenden Kammer 6b verschließt. Dadurch wird der Saugstrom 4b durch die zweite Kammer 6b unterbrochen, während der Saugstrom 4a durch die erste Kammer 6a weiter strömt und für eine Aufrechterhaltung des Saugbetriebs des Staubsaugers 1 sorgt. Der Saugstrom 4a durch die erste Kammer 6a des Staubsaugers 1 wird in Fig. 4 durch die gestrichelte Linie in der linken Bildhälfte symbolisiert.

Zu sehen ist in Fig. 4 auch ein Filterkuchen 24, der am zweiten Filterelement 7b anhaftet. Diesen Filterkuchen 24 von dem Filterelement 7b der zweiten Kammer 6b zu lösen, ist das Ziel der Filterabreinigung, die in Fig. 4 gestartet wird. Weiter zeigt Fig. 4, dass zwischen der elastischen Membran 11b und dem Filterelement 7b ein Rest-Luftvolumen 18b eingeschlossen wird, wobei oberhalb der elastischen Membran 11b und der innenliegenden Oberseite der Kammer 6b ein belüfteter Raum 17b gebildet wird.

Fig. 5 zeigt einen Abreinigungszustand der zweiten Kammer 6b des Staubsaugers 1. In diesem Abreinigungszustand hat sich die elastische Membran 11b weiterbewegt bzw. ihre Form verändert, so dass sie nun weiter die Turbinenöffnung 9b verschließt, aber darüber hinaus auch an den Innenwänden der Kammer 6b anliegt. Auf dem Weg in diesen dritten Zustand hat die elastische Membran 11b das Rest-Luftvolumen 18b dergestalt komprimiert, dass durch die rasche Kompression ein Abreinigungsimpuls oder Druckluftstoß auf das Filterelement 7b übertragen wird. Durch den Stoß wird das Filterelement 7b mechanisch erschüttert, so dass an dem Filterelement 7b anhaftender Filterkuchen 24 abgeschüttelt wird und in dem Sammelbehälter 5 des Staubsaugers 1 fällt.

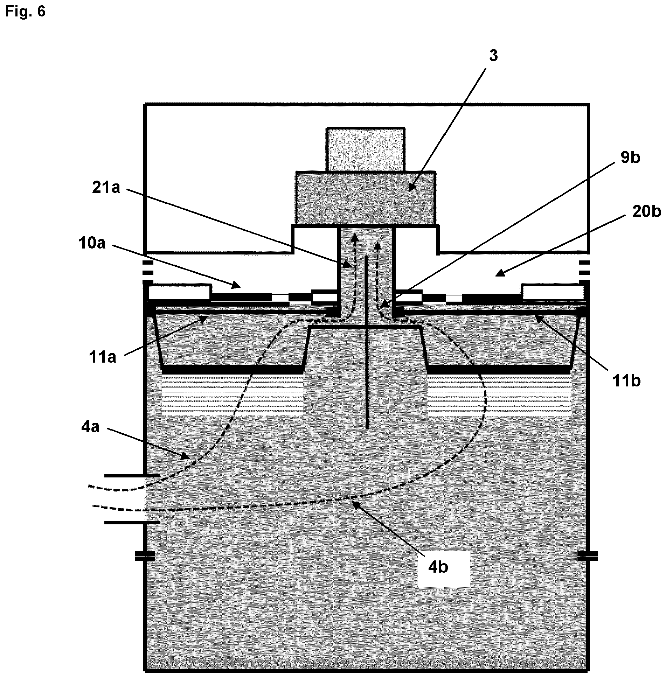

Fig. 6 zeigt eine schematische Darstellung des Staubsaugers 1 am Ende des Abreinigungsvorgangs der zweiten Kammer 6b. Um den Abreinigungsprozess zu beenden, wird das Ventil 10b betätigt und dadurch die zuvor geöffnete Belüftungsöffnung 8b geschlossen, so dass in der Kammer 6b durch die Turbine 3 erneut ein Unterdruck, der für den Saugbetrieb erforderlich ist, aufgebaut wird. Es ist im Sinne der Erfindung insbesondere bevorzugt, dass sich der Unterdruck zwischen der elastischen Membran 11b und dem Filterelement 7b aufbaut. Bei Beendigung des Abreinigungsvorgangs hat sich die elastische Membran 11b in den entspannten Zustand zurückbewegt, wobei diese Rückbewegung durch den sich erneut aufbauenden Unterdruck innerhalb der Kammer 6b unterstützt wird. Insbesondere erzeugt der sich erneut aufbauende Saugstrom 4b für zusätzliche Rückstellkräfte, die auf die elastische Membran 11b wirken und die Membran 11b dabei unterstützen in den entspannten Zustand zurückzukehren. Nach Ende des Abreinungsvorgangs der zweiten Kammer 6b bzw. des Filterelements 7b in der zweiten Kammer 6b nehmen wieder beide Kammern 6a, 6b an dem Saugbetrieb des Staubsaugers 1 teil, so dass beide Saugströme 4a, 4b durch den Staubsauger 1 fließen. In dem in Fig. 6 dargestellten Ausführungsbeispiel der Erfindung sind die Belüftungsöffnungen 8a, 8b der Kammern 6a, 6b jeweils geschlossen, während die Turbinenöffnungen 9a, 9b zu den Strömungskanalabschnitten 21a, 21b geöffnet vorliegen.

Fig. 7 bis 9 zeigen schematische Darstellungen des Staubsaugers 1, während das Filterelement 7a der ersten Kammer 6a abgereinigt wird. Die Figuren und ihre Inhalte entsprechen im Wesentlichen den Fig. 4 bis 6, wobei das Bezugszeichen «b» in der Beschreibung durch ein «a» zu ersetzen ist.

### Bezugszeichenliste

- 1: Staubsauger
- 2: Filtereinrichtung
- 3: Turbineneinrichtung
- 4: Hauptluftstrom, 4a: erster Hauptluftstrom, 4b: zweiter Hauptluftstrom
- 5: Sammelbehälter
- 6: Kammer, 6a: erste Kammer, 6b: zweite Kammer
- 7: Filterelement, 7a: erstes Filterelement, 7b: zweites Filterelement
- 8: Belüftungsöffnung, 8a: erste Belüftungsöffnung, 8b: zweite Belüftungsöffnung
- 9: Turbinenöffnung, 9a: erste Turbinenöffnung, 9b: zweite Turbinenöffnung
- 10: Ventil, 10a: erstes Ventil, 10b: zweites Ventil
- 11: elastische Membran, 11a: erste elastische Membran, 11b: zweite elastische Membran
- 12: Stellglied, 12a: Stellglied für das Ventil der ersten Kammer, 12b: Stellglied für das Ventil der zweiten Kammer
- 13: Einströmöffnung, 13a: erste Einströmöffnung, 13b: zweite Einströmöffnung
- 14: Öffnungen im Ventil
- 15: Druckausgleichsstrom
- 16: Bypass-Kapillare, 16a: erste Bypass-Kapillare, 16b: zweite Bypass-Kapillare
- 17: belüfteter Bereich zwischen Oberseite der Kammern und elastischer Membran
- 18: Rest-Luftvolumen
- 19: Saugschlauch-Einlass
- 20: Belüftungskanal
- 21: Strömungskanalabschnitt
- 22: Motor
- 23: Staubsauger-Kopf
- 24: Filterkuchen
- 25: Trennwand

## Patentansprüche

1. Filtereinrichtung (2) für einen Staubsauger (1) mit einer Turbineneinrichtung (3) und e-nem Motor (22) zum Erzeugen eines ersten Hauptluftstroms (4a) und/oder eines zweiten Hauptluftstroms (4b) in dem Staubsauger (1)
**gekennzeichnet durch**
eine erste Kammer (6a) und eine zweite Kammer (6b) mit je einem Filterelement (7a, 7b), einer Belüftungsöffnung (8a, 8b) und einer Turbinenöffnung (9a, 9b),
wobei während eines Saugbetriebs durch mindestens eine der Kammern (6a und/oder 6b) die Turbinenöffnung (9a, 9b) der jeweiligen Kammer (6a und/oder 6b) geöffnet ist, so dass eine Strömungsverbindung zwischen der Kammer (6a und/oder 6b) und der Turbineneinrichtung (3) besteht, und die Belüftungsöffnung (8a, 8b) geschlossen ist, so dass in der Kammer (6a und/oder 6b) ein Unterdruck herrscht,
wobei ein Abreinigungsvorgang eines Filterelements (7a oder 7b) durch eine Betätigung eines Ventils (10a oder 10b) initiiert wird, so dass ein eine Druckänderung hervorrufender Druckausgleichsstrom in die Kammer (6a oder 6b) gelangt,
wobei durch die Druckänderung die Turbinenöffnung (9a oder 9b) durch eine elastische Membran (11a oder 11b) verschlossen und ein Abreinigungsimpuls auf das Filterelement (7a oder 7b) ausgeübt wird.

2. Filtereinrichtung (2) nach Anspruch 1
**dadurch gekennzeichnet, dass**
das Schließen der Turbinenöffnung (9a oder 9b) durch eine Formänderung und/oder durch eine Bewegung der elastischen Membran (11a oder 11b) erfolgt.

3. Filtereinrichtung (2) nach Anspruch 1 oder 2
**dadurch gekennzeichnet, dass**
die Strömungsverbindung zwischen der Kammer (6a und/oder 6b) und der Turbineneinrichtung (3) von einem Strömungskanalabschnitt (21a, 21b) gebildet wird.

4. Filtereinrichtung (2) nach einem der vorhergehenden Ansprüche
**dadurch gekennzeichnet, dass**
die Belüftungsöffnungen (8a, 8b) zwischen den Kammern (6a, 6b) und Belüftungskanälen (20a, 20b) angeordnet vorliegen.

5. Filtereinrichtung (2) nach Anspruch 4
**dadurch gekennzeichnet, dass**
die Belüftungskanäle (20a, 20b) zwischen einem Staubsammelbehälter (5) und einem Staubsauger-Kopf (23) des Staubsaugers (1) angeordnet vorliegen.

6. Filtereinrichtung (2) nach einem der vorhergehenden Ansprüche
**dadurch gekennzeichnet, dass**
die Ventile (10a, 10b) von Stellgliedern (12a, 12b) bewegt werden.

7. Filtereinrichtung (2) nach einem der Ansprüche 4 bis 6
**dadurch gekennzeichnet, dass**
die Ventile (10a, 10b) Öffnungen (14) aufweisen, wobei die Öffnungen (14) durch eine Bewegung der Ventile (10a, 10b) mit den Belüftungsöffnungen (8a, 8b) im Übereinstimmung bringbar sind, wodurch eine Strömungsverbindung zwischen den Belüftungsöffnungen (8a, 8b) und den Belüftungskanälen (20a, 20b) hergestellt wird.

8. Filtereinrichtung (2) nach einem der vorhergehenden Ansprüche
**dadurch gekennzeichnet, dass**
die Belüftungsöffnungen (8a, 8b) durch eine Betätigung der Ventile (10a, 10b) geöffnet oder geschlossen werden.

9. Filtereinrichtung (2) nach einem der vorhergehenden Ansprüche
**dadurch gekennzeichnet, dass**
die Hauptluftströme (4a, 4b) von dem Staubsammelbehälter (5), durch die Filterelemente (7a, 7b) durch Einströmöffnungen (13a, 13b) in die Kammern (6a, 6b) gelangen, wobei die Hauptluftströme (4a, 4b) im Saugbetrieb durch die geöffneten Turbinenöffnung (9a, 9b) weiter in die Strömungskanalabschnitte (21a, 21b) gelangen.

10. Verfahren zum Abreinigen einer Filtereinrichtung (2) in einem Staubsauger (1), wobei das Verfahren durch die folgenden **Schritte gekennzeichnet** ist:
a) Bereitstellung einer Filtereinrichtung (2) nach einem der vorhergehenden Ansprüche in einem Staubsauger (1),
b) Betrieb des Staubsaugers (1), wobei bei Betrieb des Staubsaugers (1) in einem Sammelbehälter (5) des Staubsaugers (1) und in mindestens einer Kammer (6a oder 6b) des Staubsaugers (1) ein Unterdruck herrscht,
c) Betätigung eines Ventils (10a oder 10b), wodurch eine Belüftungsöffnung (8a oder 8b) geöffnet wird, so dass ein eine Druckänderung hervorrufender Druckausgleichsstrom in die Kammer (6a oder 6b) gelangt und durch die Druckänderung eine Turbinenöffnung (9a oder 9b) der Kammer (6a oder 6b) durch eine elastische Membran (11a oder 11b) verschlossen wird,
d) Abreinigung eines Filterelements (7a oder 7b) durch einen Abreinigungsimpuls, der von der elastischen Membran (11a oder 11b) auf das Filterelement (7a oder 7b) ausgeübt wird.

11. Verfahren nach Anspruch 10
**dadurch gekennzeichnet, dass**
die Abreinigung des Filterelements (7a oder 7b) einer der beiden Kammern (6a oder 6b) bei fortgesetztem Saugbetrieb durch die andere Kammer (6b oder 6a) erfolgt.
